# EUROPÄISCHE PATENTSCHRIFT

(11) **EP 2 209 757 B1**
(45) Veröffentlichungstag und Bekanntmachung des Hinweises auf die Patenterteilung: **16.01.2013**
(21) Anmeldenummer: 08847245.1
(22) Anmeldetag: 07.11.2008
(51) Int. Cl.: C05G 3/04

(54) **BODENVERBESSERUNGSMITTEL UND SEINE VERWENDUNG**
SOIL IMPROVER AND USE THEREOF
AMELIORANT DU SOL ET SON UTILISATION

(30) Priorität: 08.11.2007 DE 102007053622; 22.11.2007 DE 102007056264
(43) Veröffentlichungstag der Anmeldung: 28.07.2010
(73) Patentinhaber: Arpolith GmbH, 46325 Borken (DE)
(72) Erfinder: WINDHOEVEL, Volker, 46325 Borken (DE)
(74) Vertreter: Michalski Hüttermann & Partner
(86) Internationale Anmeldenummer: PCT/EP2008/009390
(87) Internationale Veröffentlichungsnummer: WO 2009/059775

(56) Entgegenhaltungen:
- WO-A-91/11410
- WO-A-03/000621
- FR-A- 2 305 452
- US-A1- 2004 011 102
- US-A1- 2004 068 073
- US-A1- 2005 159 315

## Beschreibung

Die vorliegende Erfindung betrifft ein Bodenverbesserungsmittel (Bodenhilfsstoff) nach dem Oberbegriff von Anspruch 1 sowie dessen Verwendung, insbesondere zur Verbesserung der Bodenqualität, insbesondere zur Erhöhung des Wasseraufnahme- und/oder Wasserspeichervermögens von Böden und/ oder zur Auflockerung (z. B. Aerifizierung) von Böden (z. B. in der Landwirtschaft, im Wein-, Garten- und Landschaftsbau, für Sport-, Golf-, Garten-, Rasen- und Reitplätze, zur Dachbegrünung, zur Geländebefestigung, insbesondere bei Hanglagen, zur Desertifikationsbekämpfung in ariden Gebieten, zur Pflanzenwachstumsförderung und -regulierung oder dergleichen).

Aus dem Stand der Technik sind zahlreiche Bodenverbesserungsmittel bekannt. Diese besitzen jedoch oftmals nicht die gewünschte Effizienz, insbesondere nicht im Hinblick auf eine fördernde Wirkung des Vegetationswachstums. Des weiteren ist nicht immer eine ausreichende Biokompatibilität gewährleistet.

So beschreibt die DE 295 16 675 U1 einen wasserspeichernden Bodenhilfsstoff, welcher ein Hydrogel, Alginat und gegebenenfalls Ton enthält. Das dort beschriebene Material enthält keine ausreichenden Mengen an Pflanzennährstoffen. Auch ist keine retardierte Langzeitbereitstellung von Pflanzennährstoffen möglichen. Zudem weisen Hydrogele nicht immer ein ausreichendes Wasseraufnahme- und Wasserspeichervermögen auf und führen zudem in größeren Mengen zu einer mangelnden Durchlüftung des Boden, so daß Wurzelfäulnis der betreffenden Vegetation eintreten kann.

Des weiteren wurden im Stand der Technik auch sogenannte superabsorbierende Polymermaterialien (SAP) für die Herstellung von Bodenverbesserungsmitteln in Betracht gezogen. Die sogenannten superabsorbierenden Polymere (SAP) sind aufgrund ihrer hohen Quellungseigenschaften und ihrer Wasseraufnahmefähigkeit bislang bevorzugt in der Hygieneindustrie eingesetzt worden, so z. B. in Windeln, Damenbinden etc.

In der DE 101 30 427 A1 bzw. der korrespondierenden WO 03/000621 A1 sowie in der DE 10 2005 021 221 A1 bzw. der korrespondierenden WO 2006/ 119828 A1 sind jeweils poröse, wasserquellbare Polymere mit Schwammstruktur und superabsorbierenden Eigenschaften, insbesondere auf der Basis von Polyacrylsäure, zusammen mit anorganischen und organischen Ballast- und Zusatzstoffen beschrieben, welche sich als Bodenverbesserungsmittel eignen sollen. Die organischen Polymere basieren insbesondere auf Homopolymeren oder Copolymeren der Acrylsäure mit freien Carboxylsäurefunktionen, wobei die dort beschriebenen Materialien wasserspeichernde Eigenschaften aufweisen und folglich unter anderem als Bodenverbesserungsmittel Einsatz finden sollen. Da die dort beschriebenen Zusammensetzungen jedoch freie Carboxylgruppen besitzen, weisen sie eine relativ hohe Alkalianfälligkeit auf, was zu einer reduzierten Quellbarkeit bzw. Wasseraufnahme führt. Auch ist das dort beschriebene Material nicht in allen Fällen ausreichend biokompatibel und bioverfügbar, insbesondere nicht hinreichend schnell abbaubar. Zudem neigt das dort beschriebene Material bei Langzeiteinsatz in Böden zu einer unerwünschten Gelbildung, was hinderlich im Hinblick auf das Pflanzenwachstum ist, insbesondere die Wurzelbildung schädigen kann. Im Fall des Zusatzes von Additiven, insbesondere Pflanzennährstoffen, ist kein Langzeiteffekt, insbesondere keine verzögerte Freisetzung, gegeben, da diese Substanzen der dort beschriebenen Mischung nur separat zugesetzt sind, jedoch nicht wirksam hieran gebunden sind. Auch ist das Quellverhalten nicht unter allen Bedingungen reversibel, so daß gespeichertes Wasser von dem dort beschriebenen Material nicht ohne weiteres wieder an die Pflanzen abgegeben werden kann. Schließlich führen die dort beschriebenen Herstellungsverfahren zu einem relativ hohen Restmonomergehalt im Endprodukt, was bei der Verwendung als Bodenhilfsmittel in bezug auf das Vegetationswachstum abträglich ist.

Weitere Bodenverbesserungsmittel sowie Polymere hierfür und Verfahren zu deren Herstellung sind in der US 2005/159315, US 2004/011102, WO 91/11410 und WO 03/000621 offenbart.

Eine Aufgabe der vorliegenden Erfindung besteht somit darin, die Nachteile des eingangsgeschilderten Standes der Technik zumindest weitgehend zu vermeiden oder aber wenigstens abzuschwächen.

Eine weitere Aufgabe der vorliegenden Erfindung besteht darin, eine gegenüber den bestehenden Produkten des Standes der Technik und ihren Anwendungen neues und verbessertes Produkt bereitzustellen, welches in der Lage ist, einerseits die verschiedenen Inhaltsstoffe, insbesondere Fest- wie Flüssigkomponenten, sozusagen als Bindemittel miteinander zu einem Homogenisat zu vereinen und andererseits die Fähigkeit als Wasserspeichermedium zu erhalten.

Eine wiederum weitere Aufgabe der vorliegenden Erfindung besteht darin, ein Bodenverbesserungsmittel mit guter biologischer Abbaubarkeit bereitzustellen, welches bei Erhöhung des hydrophilen Charakters gleichzeitig eine verbesserte Wasseraufnahme- und/oder Wasserspeicherfähigkeit bzw. Quellfähigkeit aufweist.

Zur Lösung der zuvor geschilderten Aufgabenstellung schlägt die vorliegende Erfindung somit ein Bodenverbesserungsmittel nach Anspruch 1 vor; weitere, vorteilhafte Ausgestaltungen sind Gegenstand der diesbezüglichen Unteransprüche.

Weiterer Gegenstand der vorliegenden Erfindung ist die Verwendung des erfindungsgemäßen Bodenverbesserungsmittels, wie sie in den betreffenden Verwendungsansprüchen definiert ist.

Gegenstand der vorliegenden Erfindung - gemäß einem **e r s t e n** Aspekt der vorliegenden Erfindung - ist somit ein Bodenverbesserungsmittel (Bodenhilfsstoff, welches sich insbesondere zur Erhöhung des Wasseraufnahme- und/oder Wasserspeichervermögens von Böden eignet, wobei das Bodenverbesserungsmittel ein wasserquellbares Matrixmaterial auf Basis mindestens eines organischen Polymers aufweist, wobei dem Matrixmaterial anorganische Feststoffpartikel zugesetzt sind; das erfindungsgemäße Bodenverbesserungsmittel ist dadurch gekennzeichnet, daß das organische Polymer des wasserquellbaren Matrixmaterials kohlenhydratbasierte Struktureinheiten, insbesondere kohlenhydratbasierte funktionelle Gruppen, umfaß,
wobei die kohlenhydratbasierten Struktureinheiten an das organische Polymer mittels Veresterung chemisch gebunden sind;
- wobei das organische Polymer des wasserquellbaren Matrixmaterials eine schwammartige und/oder poröse, Hohlräume aufweisende Struktur besitzt, wobei in das organische Polymer die anorganischen Feststoffpartikel eingelagert sind und/oder wobei an das organische Polymer die anorganischen Feststoffpartikel gebunden sind;
- wobei das organische Polymer des wasserquellbaren Matrixmaterials unter Einwirkung von Mikroorganismen biologisch abbaubar ausgebildet ist;
- wobei das organische Polymer des wasserquellbaren Matrixmaterials auf Basis mindestens eines superabsorbierenden Polymers (SAP) ausgebildet ist und sich von mindestens einer ungesättigten Carbonsäure aus der Gruppe von Acrylsäure, Methacrylsäure sowie deren Mischungen und Estern ableitet, wobei die kohlenhydratbasierten Struktureinheiten über die Carbonsäurefunktionen an das organische Polymer gebunden sind, wobei 3 % bis 80 % der Carbonsäurefunktionen des organischen Polymers mit kohlenhydratbasierten Struktureinheiten verestert sind; und
- wobei das Bodenverbesserungsmittel, bezogen auf das Bodenverbesserungsmittel, einen Restmonomergehalt von weniger als 1 Gew.-% aufweist.

Durch die Modifizierung der organischen Polymerstruktur mittels kohlenhydratbasierter Struktureinheiten wird zum einen die Biokompatibilität, insbesondere die Bioverfügbarkeit und/oder biologische Abbaubarkeit, des erfindungsgemäßen Bodenverbesserungsmittels signifikant verbessert. Zum anderen wird hierdurch, wie nachfolgend noch ausgeführt wird, auch herstellungs-technisch eine deutliche Vereinfachung bzw. Verbesserung erreicht, da auf spezielle Additive im Rahmen des Herstellungsprozesses, insbesondere des Polymerisationsprozesses, im Rahmen der vorliegenden Erfindung verzichtet werden kann, was insbesondere bei großtechnischer Umsetzung von Bedeutung ist und zu signifikanten Einsparungen und Vereinfachungen im Verfahrensablauf führt. Des weiteren werden hierdurch auch das Wasseraufnahme- und Wasserspeichervermögen sowie die Quellfähigkeit in positiver Weise beeinflußt bzw. signifikant verbessert.

Durch die schwammartige bis hochporöse Ausbildung des polymeren Matrixmaterials wird zudem ein positives Auflockerungsverhalten in bezug auf die zu behandelnden Böden, insbesondere eine signifikante Aerifizierung, erreicht (Der diesbezügliche Aerifizierungsquotient bzw. -koeffizient bei nur 1 gew.-%iger Zugabe des erfindungsgemäßen Bodenverbesserungsmittels zu einem zu behandelnden Boden beträgt mindestens 5 %, insbesondere mindestens 7,5 %, vorzugsweise mindestens 10 %.).

Mit anderen Worten betrifft die vorliegende Erfindung somit ein anorganischorganisches Komposit- bzw. Hybridmaterial, welches mit einer kohlenhydratbasierten Struktureinheit modifiziert ist und auf diese Weise eine verbesserte Biokompatibilität, insbesondere Bioverfügbarkeit und biologische Abbaubarkeit, mit sich bringt, insbesondere im Hinblick darauf, daß die Kohlenhydratkomponente unmittelbar an das organische Polymer gebunden ist, so daß sie zeitlich verzögert bzw. retardiert durch Abbau des organischen Polymers bei seiner Verwendung in Böden als Pflanzennährstoff zur Verfügung gestellt wird. Infolgedessen brauchen keine zusätzlichen, separaten Kohlenhydratkomponenten als Pflanzennährstoffe zu dem erfindungsgemäßen Bodenverbesserungsmittel als separate Komponente hinzugefügt werden, auch wenn dies erfindungsgemäß zusätzlich nicht ausgeschlossen ist.

Im Rahmen der vorliegenden Erfindung ist es bevorzugt, wenn das organische Polymer vernetzt, insbesondere strukturvernetzt, ausgebildet ist. Hierdurch wird eine verbesserte Strukturstabilität des als Matrixmaterial eingesetzten organischen Polymers und insbesondere eine verbesserte Handhabbarkeit des erfindungsgemäßen Bodenverbesserungsmittels, insbesondere bei seiner Einarbeitung in Böden, erreicht. Die Vernetzung des erfindungsgemäß eingesetzten organischen Polymers kann mit dem Fachmann an sich bekannten Maßnahmen bewirkt werden, insbesondere über eine Vernetzung mittels difunktioneller Vernetzer, wie beispielsweise Diolen (z. B. Butandiol-1,4-diacrylat), wobei die Vernetzer dem Polymerisationseinsatz bei der Herstellung des Polymers, insbesondere gegen Ende der Polymerisation, zugesetzt werden. Damit keine zu starke Vernetzung des eingesetzten organischen Polymers vorliegt, sollte der Vernetzergehalt, bezogen auf das organische Polymer, im Mengenbereich von 0,01 bis 20 Gew.-%, insbesondere 0,1 bis 10 Gew.-%, vorzugsweise 0,2 bis 5 Gew.-%, in dem letztendlich resultierenden organischen Polymer vorhanden sein.

Die kohlenhydratbasierten Struktureinheiten sind an das organische Polymer chemisch gebunden. Dies kann beispielsweise mittels Pfropfung oder Kondensation, insbesondere Veresterung, erfolgen. Auf diese Weise wird gewährleistet, daß bei Verwendung des erfindungsgemäßen Bodenverbesserungsmittels eine Langzeitbioverfügbarkeit gewährleistet ist, insbesondere der kohlenhydratbasierte Bestandteil zeitversetzt bzw. retardiert freigesetzt bzw. abgebaut wird, so daß die hieraus resultierenden Pflanzennährstoffe für die Pflanzenversorgung langzeitverfügbar sind.

Im allgemeinen besitzt das erfindungsgemäß eingesetzte organische Polymer eine schwammartige bzw. poröse, insbesondere Hohlräume aufweisende, Struktur. In diese schwammartige bzw. poröse Struktur sind dann die anorganischen Feststoffpartikel eingelagert, wobei die anorganischen Feststoffpartikel im allgemeinen an das organische Polymer gebunden, insbesondere physikalisch gebunden, sind, was im allgemeinen dadurch realisiert wird, daß die anorganischen Feststoffpartikel dem Polymerisationsansatz bei der Herstellung des eingesetzten organischen Polymers zugesetzt werden.

Wie zuvor ausgeführt ist das erfindungsgemäß eingesetzte organische Polymer biologisch abbaubar, unter Einwirkung von Mikroorganismen abbaubar, ausgebildet und zudem bioverfügbar ausgebildet. Zur Erzielung eines guten Wasseraufnahme- und/oder Wasserspeichervermögens ist das eingesetzte organische Polymer im allgemeinen hydrophil ausgebildet.

das eingesetzte organische Polymer ist im allgemeinen auf Basis mindestens eines superabsorbierenden Polymers (SAP) ausgebildet. Im Unterschied zur herkömmlichen superabsorbierenden Polymeren wird aber aus den vorgenannten Gründen ein mit Kohlenhydrat basierten Struktureinheiten modifiziertes superabsorbierendes Polymer eingesetzt:

Erfindungsgemäß ist es bevorzugt, wenn das organische Polymer ein Homopolymer und/oder Copolymer mindestens einer ethylenisch ungesättigten organischen Verbindung, insbesondere von Acrylsäure, Methacrylsäure oder deren Derivaten, ist.

Besonders bevorzugt ist es, wenn das organische Polymer ein carboxylgruppenhaltiges Polymer ist.

Insbesondere leitet sich das eingesetzte organische Polymer von mindestens einer ungesättigten Carbonsäure ab. Hierbei kann es sich um eine aliphatische, aromatisch-aliphatische oder aromatische ungesättigte Carbonsäure, bevorzugt um eine aliphatische ungesättigte Carbonsäure, insbesondere eine ungesättigte C₂-C₂₀-Carbonsäure, handeln, welche besonders bevorzugt aus der Gruppe von Acrylsäure, Methacrylsäure sowie deren Mischungen und Derivaten, insbesondere Estern, ausgewählt ist, besonders bevorzugt aus der Gruppe von Acrylsäure und deren Derivaten, insbesondere Estern.

In erfindungsgemäß besonders bevorzugter Weise handelt es sich bei dem organischen Polymer um ein Polyacrylat oder Polymethacrylat, bevorzugt um ein vernetztes, insbesondere strukturvemetztes Polyacrylat oder Polymethacrylat, ganz besonders bevorzugt um ein insbesondere vernetztes, vorzugsweise strukturvernetztes Polyacrylat,

die kohlenhydratbasierten Struktureinheiten sind an das organische Polymer kondensiert, mittels Veresterung.

Die kohlenhydratbasierten Struktureinheiten sind über die Carbonsäure-funktionen des Polymers an das organische Polymer gebunden, vorzugsweise mittels Kondensation, insbesondere mittels Veresterung. Dabei soll mindestens 3 %, vorzugsweise mindestens 5 %, bevorzugt mindestens 10 %, und/oder insbesondere bis zu 80 %, vorzugsweise bis zu 50 %, besonders bevorzugt bis zu 25 %, der Carbonsäurefunktionen des organischen Polymers mit kohlenhydratbasierten Struktureinheiten verestert sein. 3% bis 80 %, vorzugsweise 5 % bis 50 %, bevorzugt 10 % bis 25 %, der Carbonsäurefunktionen des organischen Polymers sind mit kohlenhydratbasierten Struktureinheiten verestert.

Gemäß einer erfindungsgemäß Ausführungsform ist das organische Polymer ein insbesondere vernetztes, vorzugsweise quervernetztes Polyacrylat oder Polymethacrylat, wobei mindestens 3 %, vorzugsweise mindestens 5 %, bevorzugt mindestens 10 %, und/oder insbesondere bis zu 80 %, vorzugsweise bis zu 50 %, besonders bevorzugt bis zu 25 %, der Carbonsäurefunktionen des organischen Polymers mit kohlenhydratbasierten Struktureinheiten verestert sind. Vorteilhafterweise sind 3 % bis 80 %, vorzugsweise 5 % bis 50 %, bevorzugt 10 % bis 25 % der Carbonsäurefunktionen des organischen Polymers mit kohlenhydratbasierten Struktureinheiten verestert.

Durch die teilweise Veresterung der Carbonsäurefunktionen ist die Erdalkalianfälligkeit des erfindungsgemäßen Bodenverbesserungsmittels gegenüber Produkten ausschließlich mit freien Carbonsäurefunktionen drastisch erhöht.

Grundsätzlich kann die Menge an kohlenhydratbasierten Struktureinheiten in dem eingesetzten organischen Polymer in weiten Grenzen variieren. Als besonders vorteilhaft hat es sich erwiesen, wenn das eingesetzte organische Polymer kohlenhydratbasierte Struktureinheiten in einem Gewichtsverhältnis organisches Polymer/kohlenhydratbasierte Struktureinheiten ≥ 1 : 1, insbesondere ≥ 2 : 1, vorzugsweise ≥ 2,5 : 1, besonders bevorzugt ≥ 3 : 1, ganz besonders bevorzugt ≥ 4 : 1, enthält. Im allgemeinen sollte das organische Polymer kohlenhydratbasierte Struktureinheiten in einem Gewichtsverhältnis organisches Polymer/kohlenhydratbasierte Struktureinheiten im Bereich von 1 : 1 bis 50 : 1, insbesondere 2 : 1 bis 20 : 1, vorzugsweise 3 : 1 bis 10 : 1, besonders bevorzugt 4 : 1 bis 6 : 1, enthalten. Dennoch kann es anwendungsbezogen oder einzelfallbedingt erforderlich werden, von den vorgenannten Werten abzuweichen, ohne daß der Rahmen der vorliegenden Erfindung verlassen ist. Die vorgenannten Wertebereiche resultieren zum einen aus der Tatsache, daß sich das Quellverhalten über die kohlenhydratbasierten Struktureinheiten gezielt steuern läßt, wobei dieses Quellverhalten jedoch nicht übermäßig ausgeprägt sein sollte, und zum anderen eine gewisse Restazidität im Hinblick auf die Anwendung in den betreffenden Böden, insbesondere zu Pufferzwecken, bereitgehalten werden sollte.

Gemäß einer erfindungsgemäß besonders bevorzugten Ausführungsform handelt es sich bei dem eingesetzten organischen Polymer um ein insbesondere vernetztes, vorzugsweise quervernetztes Polyacrylat oder Polymethacrylat, bevorzugt Polyacrylat, wobei das organische Polymer kohlenhydratbasierte Struktureinheiten in einem Gewichtsverhältnis organisches Polymer/kohlenhydratbasierte Struktureinheiten ≥ 1 : 1, insbesondere ≥ 2 : 1, vorzugsweise ≥ 2,5 : 1, besonders bevorzugt ≥ 3 : 1, ganz besonders bevorzugt ≥ 4 : 1, enthält. Vorzugsweise enthält das organische Polymer kohlenhydratbasierte Struktureinheiten in einem Gewichtsverhältnis organisches Polymer/kohlenhydratbasierte Struktureinheiten im Bereich von 1 : 1 bis 50 : 1, insbesondere 2 : 1 bis 20 : 1, vorzugsweise 3 : 1 bis 10: 1, besonders bevorzugt 4 : 1 bis 6 : 1.

Aus den vorgenannten Gründen hat es sich als vorteilhaft erwiesen, wenn das erfindungsgemäße Bodenverbesserungsmittel kohlenhydratbasierte Struktureinheiten, bezogen auf das Bodenverbesserrungsmittel, in Mengen von 0,1 bis 40 Gew.-%, insbesondere 0,2 bis 30 Gew.-%, vorzugsweise 0,5 bis 25 Gew.-%, besonders bevorzugt 1 bis 10 Gew.-%, enthält.

Was die kohlenhydratbasierten Struktureinheiten anbelangt, so können diese grundsätzlich vom gleichen oder unterschiedlichen Typ innerhalb des organischen Polymers ausgebildet sein. Im Fall voneinander verschiedener Struktureinheiten können mindestens zwei, vorzugsweise mindestens drei voneinander verschiedene Struktureinheiten vorliegen.

Insbesondere können die kohlenhydratbasierten Struktureinheiten auf Basis von saccharidischen Verbindungen, insbesondere aus der Gruppe von Mono-, Di-, Oligo- und Polysacchariden und deren Mischungen, ausgebildet sein.

Zu dem allgemeinen Begriff der Kohlenhydrate sowie der Saccharide, insbesondere Mono-, Di-, Oligo- und Polysacchariden, kann beispielsweise auf Römpp Chemielexikon, 10. Auflage, Georg Thieme Verlag Stuttgart/New York, 1996 bis 1999 mit den dort referierten einschlägigen Stichworten verwiesen werden.

Bevorzugt sind die kohlenhydratbasierten Struktureinheiten auf Basis von organischen Verbindungen mit einer halbacetalbildenden Carbonylgruppe und gleichzeitig mehreren Hydroxygruppen im Molekül ausgebildet, insbesondere auf Basis von Polyhydroxyaldehyden (Aldosen) und Polyhydroxyketonen (Ketosen) sowie davon abgeleiten Verbindungen sowie deren Oligo- und Polykondensaten. Besonders bevorzugt sind Zucker und Zuckerderivate, wobei dieser Begriff fachsprachlich zur Bezeichnung mono-, di-, oligo- und polysaccharidischer Verbindungen des vorgenannten Typs verstanden wird (vgl. z. B. Römpp Chemielexikon, 10. Auflage, Georg Thieme Verlag Stuttgart/New York, Band 6, 1999, Seiten 5096 bis 5103).

In erfindungsgemäß besonders bevorzugter Weise sind die kohlenhydratbasierten Struktureinheiten auf Basis von Verbindungen aus der Gruppe von Glucose; Saccharose; Cellulose und Cellulosederivaten, insbesondere Celluloseethern und -estern; Stärke und Stärkederivaten, insbesondere Stärkeether; Melasse sowie deren Mischungen ausgebildet. Für weitergehende Einzelheiten zu den vorgenannten Verbindungen kann auf die entsprechenden Fundstellen im Römpp Chemielexikon, 10. Auflage, Georg Thieme Verlag Stuttgart/New York, 1996 bis 1999, verwiesen werden, insbesondere mit den Stichwörtern "Cellulose", "Celluloseester", "Celluloseether", "D-Glucose", "Melasse", "Saccharose", "Stärke", "Stärke-Derivate" sowie "Stärke-Ether".

Gleichermaßen können die kohlenhydratbasierten Struktureinheiten des eingesetzten organischen Polymers auf Basis von Glykanen, vorzugsweise Homoglykanen, insbesondere des vorgenannten Typs (z. B. Cellulose und Cellulosederivate, Stärke und Stärke-Derivate sowie Glykogen) ausgebildet sein. Was die eingesetzten anorganischen Feststoffpartikel anbelangt, so können grundsätzlich gleiche oder aber Mischungen voneinander verschiedener anorganischer Feststoffpartikel in dem Bodenverbesserungsmittel vorliegen. Im Fall voneinander verschiedener anorganischer Feststoffpartikel können beispielsweise mindestens zwei, vorzugsweise mindestens drei Arten voneinander verschiedener anorganischer Feststoffpartikel vorliegen.

Der anorganische Feststoff ist insbesondere ausgewählt aus mineralischen Gesteinen, insbesondere Gesteinsmehlen (d. h. mineralischen Gesteinen in feinvermahlener Form). Beispielsweise kann der anorganische Feststoff ausgewählt sein aus der Gruppe von Basalt, Bentonit, Bims, Calcit, Carbonatgesteinen, Diabas, Dolomit, Eruptivgesteinen, Feldspat, gemahlenem Glas, Gläsern, Glimmer, Gneiss, Grauwacke, Kieselerden, Kieselgur, Kieselsäure, Kreide, Lavagesteinen, Magnesit, Metalloxidgesteinen, Meteoritengesteinen, Montmorillonit, Pyrit, Quarz, Quarzsand, Schiefer, Sedimentgesteinen, Silikatgesteinen, Sulfatgesteinen, Tonen, Tongesteinen, Traß, Tuffen, Vulkanaschen, Vulkangesteinen und deren Mischungen.

Wie zuvor beschrieben, sind die anorganischen Feststoffpartikel üblicherweise in durch das organische Polymer gebildete Matrixmaterial eingelagert. Dabei können die anorganischen Feststoffpartikel an das durch das organische Polymer gebildete Matrixmaterial gebunden, insbesondere physikalisch, gebunden sein, beispielsweise indem dem Polymerisationsansatz bei der Herstellung des eingesetzten organischen Polymers die entsprechenden anorganischen Feststoffpartikel zugesetzt sind.

Die Menge an anorganischen Füllstoffpartikeln in dem erfindungsgemäßen Bodenverbesserungsmittel kann in weiten Bereichen variieren. Es hat sich als vorteilhaft herausgestellt, wenn die anorganischen Füllstoffpartikel in Mengen von 10 bis 90 Gew.-%, insbesondere 30 bis 80 Gew.-%, vorzugsweise 50 bis 75 Gew.-%, bezogen auf das Bodenverbesserungsmittel, vorhanden sind. Dennoch kann es einzelfallbedingt und anwendungsbezogen gegebenenfalls erforderlich werden, von den vorgenannten Mengen abzuweichen, ohne daß der Rahmen der vorliegenden Erfindung verlassen ist.

Im allgemeinen weisen die eingesetzten anorganischen Füllstoffpartikel Partikel- bzw. Korngröße (absolut) ≥ 2.000 µm, insbesondere ≥ 1.000 µm, vorzugsweise ≥ 500 µm, besonders bevorzugt ≥ 250 µm auf; hierbei sollten mindestens 90 %, vorzugsweise mindestens 95 %, bevorzugt mindestens 99 %, der anorganischen Füllstoffpartikel innerhalb des vorgenannten Wertebereiches liegen. Insbesondere weisen die anorganischen Füllstoffpartikel Partikel- bzw. Korngrößen (absolut) im Bereich von 1 nm bis 2.000 µm, insbesondere 10 nm bis 1.000 µm, vorzugsweise 20 nm bis 500 µm, besonders bevorzugt 50 nm bis 25 µm, auf; dabei sollten mindestens 90 %, vorzugsweise mindestens 95 %, bevorzugt mindestens 99 %, der anorganischen Füllstoffpartikel innerhalb des vorgenannten Wertebereiches liegen. Auf diese Weise wird zum einen eine gute Einarbeitbarkeit in die Polymermatrix und zum anderen eine gute Bioverfügbarkeit erreicht.

Was den Restmonomergehalt des erfindungsgemäßen Bodenverbesserungsmittels anbelangt, welche auf die Herstellung des eingesetzten organischen Polymers zurückzuführen ist, so sollte dieser möglichst gering sein, da höhere Restmonomergehalte in bezug auf das Pflanzenwachstum abträglich sind. Daher muss der Restmonomergehalt in dem erfindungsgemäßen Bodenverbesserungsmittel, bezogen auf das Bodenverbesserungsmittel, weniger als 1 Gew.-%, insbesondere weniger als 0,5 Gew.-%, vorzugsweise weniger als 0,3 Gew.-%, besonders bevorzugt weniger als 0,1 Gew.%, betragen.

Im allgemeinen ist das erfindungsgemäße Bodenverbesserungsmittel rieselfähig, insbesondere fließfähig, ausgebildet. Dies hat den Vorteil, daß es sich gut in die zu behandelnden Böden einarbeiten läßt.

Die gute Einarbeitbarkeit des erfindungsgemäßen Bodenverbesserungsmittels läßt sich insbesondere auch dadurch erreichen, daß das erfindungsgemäße Bodenverbesserungsmittel zu Formkörpern, insbesondere Pellets, Körnern, Kugeln, Granulaten, Scheiben, Plättchen oder dergleichen, verarbeitet ist.

Im allgemeinen weist das erfindungsgemäße Bodenverbesserungsmittel eine Schüttdichte im Bereich von 200 bis 900 g/l, insbesondere 500 bis 800 g/l, vorzugsweise 550 bis 750 g/l, besonders bevorzugt 600 bis 700 g/l, auf.

Das erfindungsgemäße Bodenverbesserungsmittel weist bei Wasserzusatz einen pH-Wert im Bereich von 4 bis 8, insbesondere 5 bis 7, auf. Damit ist es biokompatibel ausgerüstet.

Was die Leitfähigkeit des erfindungsgemäßen Bodenverbesserungsmittels anbelangt, so liegt diese unterhalb von 2.000 µS/cm, insbesondere unterhalb von 1.500 µS/cm, vorzugsweise unterhalb von 1.000 µS/cm.

Bevorzugter Weise ist das erfindungsgemäße Bodenverbesserungsmittel teilchenförmig ausgebildet. Dabei sollte die Teilchen- bzw. Korngröße (absolut) im Bereich von 0,01 bis 20 mm, insbesondere 0,1 bis 10 mm, vorzugsweise 1 bis 8 mm, betragen; vorzugsweise weisen mindestens 90 %, vorzugsweise mindestens 95 %, bevorzugt mindestens 99 %, der Teilchen des Bodenverbesserungsmittels Teilchen- bzw. Korngrößen im vorgenannten Wertebereiche auf. Auf diese Weise läßt sich eine gute Einarbeitbarkeit des erfindungsgemäßen Bodenverbesserungsmittels erreichen.

Eine herausragende Eigenschaft des erfindungsgemäßen Bodenverbesserungsmittels ist sein Quellverhalten, welches zeitabhängig ist. Insbesondere weist das erfindungsgemäße Bodenverbesserungsmittel innerhalb einer Stunde eine Wasseraufnahme von mindestens dem 10fachen, insbesondere mindestens dem 15fachen, vorzugsweise mindestens dem 20fachen, besonders bevorzugt mindestens dem 25fachen, seines Eigengewichts auf. Hervorzugeben ist dabei insbesondere, daß das erfindungsgemäße Bodenverbesserungsmittel ein reversibles Wasseraufnahme- und/oder Wasserspeichervermögen besitzt, welches das erfindungsgemäße Bodenverbesserungsmittel befähigt, das aufgenommene bzw. gespeicherte Wasser im Bedarfsfall an die Vegetation bzw. Bepflanzung abzugeben.

Im allgemeinen besitzt das erfindungsgemäße Bodenverbesserungsmittel ein gewichtsbezogenes Wasseraufnahmevermögen insgesamt, bezogen auf das Eigengewicht des Bodenverbesserungsmittels, von mindestens 1.000 %, insbesondere mindestens 2.000 %, vorzugsweise mindestens 2.500 %, besonders bevorzugt mindestens 3.000 %.

Weiterhin kann es vorgesehen sein, daß das erfindungsgemäße Bodenverbesserungsmittel außerdem mindestens einen weiteren Zusatzstoff enthält. Dieser kann beispielsweise ausgewählt sein aus der Gruppe von pflanzenwachstumsfördernden oder -regulierenden Substanzen, Düngemitteln, Mikroorganismen, Pilzen, Algen, Hefen, Fungiziden, Herbiziden, Pestiziden sowie Mischungen der vorgenannten Substanzen. Die diesbezügliche Menge an weiterem Zusatzstoff kann in weiten Mengen variieren und beispielsweise 0,0001 bis 10 Gew.-%, insbesondere 0,001 bis 5 Gew.-%, bezogen auf das Bodenverbesserungsmittel, betragen.

Des weiteren kann das erfindungsgemäße Bodenverbesserungsmittel außerdem mindestens ein weiteres, insbesondere wasserlösliches oder wasserdispergierbares Additiv enthalten. Dieses kann insbesondere ausgewählt sein aus der Gruppe von Alkali- oder Erdalkalisilikaten, -carbonaten, -hydroxiden, -oxiden, -nitraten, -phosphaten und -boraten; Borsäure; Phosphorsäure; Harnsäure; Harnstoff; Guanidin; Polyolen, insbesondere Glykolen; Stärke und Stärkederivaten; Cellulose und Cellulosederivaten; Polysacchariden; sowie deren Mischungen. Die Menge an dem vorgenannten Additiv kann gleichermaßen in weiten Grenzen variieren und beispielsweise 0,001 bis 20 Gew.-%, insbesondere 0,01 bis 10 Gew.-%, bezogen auf das erfindungsgemäße Bodenverbesserungsmittel, betragen.

Weiterhin kann das erfindungsgemäße Bodenverbesserungsmittel außerdem mindestens einen nichtwasserlöslichen Füllstoff enthalten, welcher beispielsweise ausgewählt sein kann aus der Gruppe von Holz, Stroh, Torf, Papier, Kunststoffgranulaten, Recyclinggranulaten, Papier, Faserstoffen, Textilmaterialien sowie deren Mischungen, wobei die einsetzbaren Mengen an diesem Füllstoff gleichermaßen in weiten Grenzen variieren können und beispielsweise 0,01 bis 20 Gew.-%, insbesondere 0,1 bis 10 Gew.-%, betragen können.

Bei seiner Ausbringung wird das Bodenverbesserungsmittel vorteilhafterweise auf einen Restfeuchtegehalt von mindestens 0,01 Gew.-%, vorzugsweise mindestens 0,1 Gew.-% eingestellt, wobei dieser Restfeuchtegehalt Werte von bis zu 80 Gew.-%, insbesondere bis zu 60 Gew.-%, vorzugsweise bis zu 35 Gew.-%, besonders bevorzugt bis zu 30 Gew.-%, annehmen kann, wobei sich die vorgenannten Gewichtsangaben jeweils auf das Gesamtgewicht des vorgenannten Gewichtsangaben jeweils auf das Gesamtgewicht des restfeuchten Bodenverbesserunsgmittels beziehen.

Wie bereits geschildert sind mit dem erfindungsgemäßen Bodenverbesserungsmittel eine Vielzahl von Vorteilen verbunden.

Im Rahmen der vorliegenden Erfindung wird ein Feststoffe und/oder Flüssigkeiten bindendes Material auf Basis eines Polymers (z. B. auf Basis von Acrylsäure) bereitgestellt, welches sozusagen als Bindemittel für die vorgenannten Stoffe fungiert, Wasser in seine Matrix einbinden kann und somit einsetzbar ist als Bodenhilfsstoff (z. B. als Wasserspeicher, als Speichermedium für Dünger, Biozide, Nährstoffe etc., als Staubbindemittel oder dergleichen).

Im Rahmen der vorliegenden Erfindung ist es somit gelungen, ein Produkt zu entwickeln, das in der Lage ist, einerseits die verschiedenen Fest- und Flüssigkomponenten sozusagen als Bindemittel miteinander zu einem Homogenisat zu vereinen und andererseits die Fähigkeit als Wasserspeichermedium zu erhalten.

Infolge des Einsatz von Kohlenhydraten als Struktureinheiten der eingesetzten Polymere werden diese Kohlenhydrate homogen in die Polymermatrix eingebunden, welche Wasser reversibel zu speichern und im Bedarfsfall auch wieder an die Umgebung abzugeben imstande ist.

Ein Kernstück der vorliegenden Erfindung im chemischen Bereich ist daher unter anderem die Verwendung von Kohlenhydraten im Polymerisationsprozeß für die Herstellung des erfindungsgemäßen Bodenverbesserungsmittels. Die chemische Bindung der Kohlenhydrate an die Polymere, wie z. B. Polymere auf Basis von (Meth-)Acrylsäure, erfolgt beispielweise durch eine Kondensationsreaktion während des Polymerisationsprozesses. Verschiedene anorganische und organische Zusatzstoffe bzw. Additive, so z. B. mineralische Feststoffe (z. B. Gesteinsmehle, Glasmehl, Sand etc.) können zusätzlich in der Polymermatrix gebunden werden, wodurch ein homogenes Produkt entsteht.

Durch Einsatz von Kohlenhydraten in dem Polymerisationsprozeß wird die biologische Abbaubarkeit des Produktes positiv beeinflußt. Durch Varianz der eingesetzten Kohlenhydrate und Kohlenhydratmengen kann die Abbaubarkeit gezielt gesteuert werden.

Die Porenstruktur des Produktes ist aufgrund dieses Herstellungsprozesses einheitlich und gleichmäßig. Dadurch wird das Wasseraufnahmevermögen des Materials optimiert. Außerdem wird dadurch eine verbesserte Freisetzungskinetik der verwendeten Substanzen erreicht.

Je nach Charakter der verwendeten Feststoffe kann auf diese Weise ein bezüglich seines vorgesehenen Anwendungsgebietes spezifisches Produkt generiert werden.

Als Staubbindemittel beispielsweise im Sportbereich sind Polymere bisher aufgrund ihrer gelartigen Struktur (z. B. Hydrogele) nur begrenzt zum Einsatz gekommen. Durch die Kombination einer Polymermatrix mit anorganischen Feststoffen kann erstmals ein strukturstabiles und elastisches Produkt generiert werden, welches einerseits genug Wasser speichert, um den entstehenden Staub zu binden, und andererseits aufgrund seiner Inhaltsstoffe ortsstabil ist. Für den Einsatz als Bodenhilfsstoff werden Feststoffe ausgewählt, die sich jeweils positiv auf die Eigenschaften des Bodens (z. B. bei Mangelerscheinungen) auswirken; insbesondere zu nennen sind hierbei Stoffe, die sich förderlich auf das Wachstum von Pflanzen auswirken bzw. den Boden (z. B. im Hinblick auf zukünftige Verwendungszwecke) verbessern.

Auf den üblicherweise bei Polymerisationen dieses Typs, die radikalisch gestartet werden, eingesetzten Katalysator Ascorbinsäure kann aufgrund des hier beschriebenen Herstellungsprozesses unter Verwendung von Kohlenhydraten verzichtet werden. Im Stand der Technik sorgt Ascorbinsäure dafür, daß Polymerisationen auch bei Monomermischungen, die unter Raumtemperatur abgekühlt werden, überhaupt gestartet werden konnten. Somit erfüllen die Kohlenhydrate innerhalb des Polymerisationsansatzes funktionelle und physikalische Eigenschaften, welche im Fall der Ascorbinsäure nicht vorliegen.

Gegenstand der Erfindung sind somit strukturstabile, polymere anorganisch-organische Hybrid- bzw. Kompositmaterialien für den Einsatz im Boden, um dort z. B. einerseits eine zusätzliche Menge an pflanzenverfügbarem Wasser reversibel zu speichern und andererseits durch Bereitstellung und/oder Verfügbarmachung von (zusätzlichen) Nährstoffen, Düngern, Bioziden etc. die Eigenschaften des Bodens zu verbessern und speziell die Fruchtbarkeit des Bodens zu erhöhen bzw. zu verbessern. Insbesondere kommen hierbei superabsorbierende Polymere zum Einsatz.

Waren superabsorbierende Polymere anfangs noch bevorzugt Produkte für den Hygienesektor, wie eingangs geschildert, deren Wasserspeichervermögen man auch in der Landwirtschaft nutzbringend einsetzen wollte, erkannte man doch bald, daß deren Eigenschaftsspektrum zu einseitig für dieses Einsatzgebiet war. Dies hatte zur Folge, daß Superabsorber nur in geringem Maße Verwendung fanden. Nachteilig wirkten sich für diese Polymere bei einem Einsatz im Boden z. B. ihre mangelnde Strukturstabilität aufgrund der gelartigen Eigenschaften im aufgequollenen Zustand, der Verlust der Quellfähigkeit bei Vorhandensein von Erdalkalien und die Zersetzung durch UV-Strahlung aus.

Im Rahmen der vorliegenden Erfindung ist es gelungen, infolge der Anbindung der kohlenhydratbasierten Struktureinheit an die polymere Matrix eine verbesserte biologische Abbaubarkeit sicherzustellen und bei einer hierdurch bedingten Erhöhung des hydrophilen Charakters gleichzeitig die Quellfähigkeit des Materials zu erhöhen. Außerdem werden die Nachteile bezüglich der Ausbildung einer Porenstruktur gegenüber bestehenden Verfahren beseitigt, so daß die Wasseraufnahmefähigkeit, die auch im Zusammenhang mit der Anzahl der vorhandenen Poren pro Volumeneinheit steht, erhöht wird.

Durch den Einsatz der vorgenannten Komponenten in der Polymerisationsreaktion ist die Möglichkeit geschaffen worden, unabhängiger von den auf Erdöl basierenden Rohstoffen, die sich zunehmend verknappen, polymerisieren zu können und dabei gleichzeitig eine gleichbleibende und/oder verbesserte Qualität bezüglich der Anforderungen an die Eigenschaften des Produktes für den Einsatz in Böden zu garantieren.

Im Rahmen der vorliegenden Erfindung wird zudem ein alkaliresistentes Produkt bereitgestellt, welches auch noch bei stark kreide- und/oder kalkhaltigen Böden anwendbar ist, welche aber die Quellfähigkeit der traditionellen Superabsorber und mangelhaft neutralisierter Produkte, insbesondere nach herkömmlichen Verfahren hergestellte Produkte, deutlich beeinträchtigten.

Das Ergebnis ist eine neue anorganisch-organische Produktklasse, die eine gleichmäßig feine Porenstruktur im gewünschten Sinn erbringt und darüber hinaus Einfluß nimmt auf Dichte, Elastizität, Härte und Wasseraufnahmefähigkeit, und zwar sowohl von Wasser hohen Härtegrades als auch hoher Leitfähigkeit.

Daneben wird der mineralische Anteil des erfindungsgemäßen Kompositmaterials durch eine bisher noch nicht zum Einsatz gebrachte Substanz ergänzt, durch die das Gesamtprodukt einen neutralen Charakter bekommt, nämlich die kohlenhydratbasierten Struktureinheiten.

Einerseits erzielt man innerhalb der Polymerisationsreaktion durch Aufpfropfen oder Ankondensieren eines natürlichen Stoffes (Kohlenhydrat) an ein synthetisches Polymer ein Produkt mit erhöhter Hydrophilie und mit gesteigertem Wasseraufnahmevermögen. Andererseits wird darüber hinaus durch den Einsatz eines Naturstoffes die biologische Abbaubarkeit gesteigert. Schließlich wird durch die Verwendung von anorganischen Feststoffpartikeln, wie z. B. fein gemahlenem Glas, sogenanntem Glasmehl (z. B. "einfache Art", d. h. ohne Schwermetalle), ein absolut neutrales, strukturstabiles, inertes Kompositmaterial produziert. Durch Verwendung des Kohlenhydrates kann außerdem auf den Einsatz des allgemein bei Polymerisationen häufig verwendeten Katalysators Ascorbinsäure verzichtet und dadurch der Herstellungsprozeß vereinfacht werden.

Die bisherigen Polymerisationen des Standes der Technik zeichnen sich dadurch aus, daß die Polymerisate auf Basis von vernetzten hydrophilen Homo- und Copolymeren aus ethylenisch ungesättigten, Säuregruppen enthaltenden polymerisierbaren Monomeren hergestellt werden. Die Neuerung besteht im Rahmen der vorliegenden Erfindung dagegen darin, daß nicht ausschließlich Säuregruppen enthaltende Monomere in der eigentlichen Polymerisationsreaktion eingesetzt werden, sondern ein bestimmter Anteil durch ein Kohlenhydrat (z. B. Saccharose) ersetzt wird. Durch diese Substitution werden nicht nur die genannten Probleme bezüglich der Porenstruktur, sondern auch die der biologischen Abbaubarkeit und der Quellungseigenschaften gelöst. Weiterhin wird das Material bezüglich der Quellungseigenschaften gegenüber dem negativen Einfluß von Salzfrachten und schädlichen Ionen resistenter.

Die Nachteile der beispielsweise nach der WO 03/000621 A1 beschriebenen und hergestellten Produkte können somit unerwartet mittels Verwendung von bisher unbeachteten Substanzen behoben werden, welche der mineralstoffhaltigen, zu polymerisierenden Monomerlösung einfach zugesetzt werden.

Überraschend ist insbesondere auch, daß das Kohlenhydrat - unbeeinflußt vom Neutralisationsgrad der zu polymerisierenden Mononomermischung - ein sehr feinporiges und hydrophiles Erzeugnis entstehen läßt. Ebenso überraschend ist die Tatsache, daß der bei Polymerisationen der vorliegenden Art notwendigerweise ebenfalls einzusetzende Katalysator "Ascorbinsäure" entfallen kann (Nach dem Stand der Technik sorgt Ascorbinsäure dafür, daß Polymerisationen auch bei Monomermischungen, die unter Raumtemperatur abgekühlt werden, überhaupt gestartet werden können.). Somit erfüllt das Kohlenhydrat innerhalb des Polymerisationsansatzes funktionelle und physikalische Eigenschaften, welche bei Ascorbinsäure nicht vorliegen.

Die gewünschte Einstellung des jeweiligen Mengen- und Mischungsverhältnisses (d. h. Polymeranteil, Anteil Kohlenhydrate, Anteile der natürlichen Mineralstoffe etc.) wird letztlich von den Bodenverhältnissen bestimmt werden, in denen das erfindungsgemäße Kompositmaterial angewendet werden soll. Der Kohlenhydratanteil sollte sich darüber hinaus auch an der eingesetzten Monomermenge orientieren und diese im allgemeinen nicht übersteigen.

Die Herstellung des erfindungsgemäßen Bodenverbesserungsmittels erfolgt im Rahmen der vorliegenden Erfindung mittels Polymerisation geeeigneter Ausgangspolymere in dem Fachmann an sich bekannter Art und Weise (z. B. radikalische Polymerisation in wäßriger Lösung bzw. Dispersion unter Einstellung des geeigneten pH-Wertes), wobei die Polymerisation in Gegenwart des Kohlenhydrates, welches in situ die Veresterung bewirkt, sowie in Gegenwart der übrigen Inhaltsstoffe (d. h. anorganische Feststoffpartikel und gegebenenfalls weitere Additive bzw. Zusatzstoffe der vorgenannten Art) durchgeführt wird und die Polymerisation mit an sich bekannten Startern, insbesondere Radikalstartern, gestartet werden kann. Für weitergehende diesbezügliche Einzelheiten kann auch auf die Ausführungsbeispiele verwiesen werden.

Weiterer Gegenstand der vorliegenden Erfindung - gemäß einem **z w e i t e n** Aspekt der vorliegenden Erfindung - ist die Verwendung des zuvor beschriebenen Bodenverbesserungsmittels, wie sie in den betreffenden Verwendungsansprüchen beschrieben ist.

So läßt sich das erfindungsgemäße Bodenverbesserungsmittel insbesondere zur Verbesserung der Bodenqualität, vorzugsweise zur Erhöhung des Wasseraufnahme- und/oder Wasserspeichervermögens von Böden und/oder zur Auflockerung von Böden, anwenden. Neben der Erhöhung des Wasseraufnahme- und/oder Wasserspeichervermögens des mit dem erfindungsgemäßen Bodenverbesserungsmittel behandelten Boden ist insbesondere die verbesserte Bodenauflockerung, insbesondere Aerifizierung, hervorzuheben.

So eignet sich das erfindungsgemäße Bodenverbesserungsmittel beispielsweise zur Anwendung in der Landwirtschaft, im Wein-, Garten- und Landschaftsbau, für Sport-, Golf-, Garten-, Rasen- und Reitplätze sowie zur Dachbegrünung.

Weiterhin eignet sich das erfindungsgemäße Bodenverbesserungsmittel zur Geländebefestigung (z. B. bei Hanglangen etc.), zur Desertifikationsbekämpfung in ariden Gebieten oder zur Pflanzenwachstumsförderung und -regulierung.

Beispielsweise läßt sich das erfindungsgemäße Bodenverbesserungsmittel als reversibler Wasser- und gegebenenfalls Wirkstoffspeicher einsetzen, insbesondere in Kombination mit den vorgenannten weiteren Inhaltsstoffen, wie Herbiziden, Pestiziden, Fungiziden, Düngemitteln, Pflanzenwachstumsbeschleunigem und -regulatoren sowie Mikroorganismen.

Das erfindungsgemäße Bodenverbesserungsmittel eröffnet also, wie zuvor geschildert, eine Vielzahl von Anwendungsmöglichkeiten: So ist das erfindungsgemäße Bodenverbesserungsmittel grundsätzlich in allen Bereiche, in denen Pflanzen wachsen können, anwendbar. Angewendet werden kann das erfindungsgemäße Bodenverbesserungsmittel als reines Pflanzsubstrat oder aber, wie zuvor geschildert, als Additiv in Böden oder anderen Einrichtungen, welche dem Pflanzenwachstum dienen (z. B. Faserkonstruktionen, wie beispielsweise Matten, Vliesen etc. aus natürlichen und/oder synthetischen Materialien). Außerdem kann das erfindungsgemäße Bodenverbesserungsmittel als Additiv für Böden zur Verbesserung der Bodeneigenschaften und für die Staubreduktion, z. B. in Sportarenen, auf Reitböden, Pferde- und Hunderennbahnen, Speedwayarenen etc., Anwendung finden.

Weiterhin läßt sich das erfindungsgemäße Bodenverbesserungsmittel auch als Keimungsbeschleuniger in Kombination mit Saatgut einsetzen.

Bei seiner Verwendung wird das Bodenverbesserungsmittel insbesondere in den Boden eingearbeitet, vorteilhafterweise durch Vermischung mit dem zu behandelnden Boden.

Zur Erzielung eines signifikanten Verbesserungseffektes sollte das erfindungsgemäße Bodenverbesserungsmittel in einer Menge von 10 bis 1.000 g/m², insbesondere 50 bis 500 g/m², vorzugsweise 75 bis 300 g/m², besonders bevorzugt 100 bis 250 g/m², bezogen auf die zu behandelnde Bodenfläche, eingesetzt werden.

Im allgemeinen wird das erfindungsgemäße Bodenverbesserungsmittel, bezogen auf die zu behandelnde Bodenmenge, in einer Menge von 0,001 bis 20 Gew.-%, insbesondere 0,01 bis 10 Gew.-%, vorzugsweise 0,05 bis 5 Gew.-%, besonders bevorzugt 0,1 bis 3 Gew.-%, eingesetzt.

Wenn das erfindungsgemäße Bodenverbesserungsmittel z. B. als Pflanzsubstrat eingesetzt wird, kann es beispielsweise in Masse, d. h. zu 100 %, eingesetzt werden oder aber zusammen mit dem Pflanzenwachstum dienenden Einrichtungen bzw. Konstruktionen verwendet werden.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Beispiel 1: Herstellung eines erfindungsgemäßen melassemodifizierten Bodenverbesserungsmittels

In einem konischen Kunststoffgefäß mit einem Fassungsvolumen von ca. 1 Liter werden 162 g Leitungswasser mit einem Härtegrad von 20°dH, worin 4,4 g Harnstoff gelöst sind, und 100 g Acrylsäure vorgelegt. Danach werden zu dieser Mischung 34,0 g Kalilauge (50,0 gew.-%ig) und 14,0 g Kaliwasserglas sowie 10,0 g Melasse zugegeben. Nach Abkühlung auf unter 10 °C wird in diese Lösung ein Mineralstoffgemisch aus 124,0 g feinem Quarzsand, 124,0 g Eifelgold und 62,0 g Bentonit eingerührt. Zum Schluß werden 0,4 g des Vernetzers Butandiol-1,4-diacrylat zugesetzt. Danach wird nochmals umgerührt und die Polymerisation mit 0,06 g Kaliumdisulfit und 1,62 g Natriumperoxidisulfat, jeweils gesättigte Lösungen, unter anfänglichem starken Rühren gestartet. Innerhalb weniger Minuten füllt die Masse das ganze Kunststoffgefäß aus und bildet darüber noch einen Pilz.

Nach dem Abkühlen wird der Polymerblock herausgenommen und eine abgeschnittene kleine Scheibe mit einem Gewicht von 1,2 g in Leitungswasser von 20°dH gelegt. Die Gewichtszunahme pro Zeit ist der nachstehenden Tabelle 1 zu entnehmen.

Der verbleibende Rest wird auf eine Restfeuchte von ca. 30 % getrocknet und anschließend vermahlen (Korngröße: 2 bis 6 mm). Die Schüttdichte liegt bei 650 bis 680 g/l, der pH-Wert (10 % Wasser) bei 5 bis 7 und die Leitfähigkeit unterhalb von 1.000 µS/cm. Der Restmonomerengehalt liegt unterhalb von 0,1 Gew.-%. Die Hälfte des auf diese Weise resultierenden Ansatzes wird zu Formkörpern (Pellets von ca. 10 mm) verarbeitet.

### Beispiel 2: Herstellung eines weiteren erfindungsgemäßen melassemodifizierten Bodenverbesserungsmittels mit variierten anorganischem Feststoff und geringerem Melasseanteil

Es wird der gleiche Ansatz wie in Beispiel 1 verwendet, wobei jedoch anstelle von feinem Sand eine Mischung von Sand/Glasmehl 1 : 1 und nur noch 10 g Melasse eingesetzt werden. Als Glasmehl wird Glasmehl der Sorte ST 220 (Reidt GmbH & Co. KG, Stolberg, Deutschland) eingesetzt.

Nach dem Abkühlen wird der Polymerblock herausgenommen und eine abgeschnittene kleine Scheibe mit einem Gewicht von 1,2 g in Leitungswasser von 20°dH gelegt. Die Gewichtszunahme pro Zeit ist der nachstehenden Tabelle 1 zu entnehmen.

### Beispiel 3: Herstellung eines wiederum weiteren erfindungsgemäßen melassemodifizierten Bodenverbesserungsmittels mit nochmals verringertem Melasseanteil

Es wird der gleiche Ansatz wie in Beispiel 2 verwendet, wobei jedoch nur noch 5 g Melasse eingesetzt werden. Nach dem Abkühlen wird der Polymerblock herausgenommen und eine abgeschnittene kleine Scheibe mit einem Gewicht von 1,2 g in Leitungswasser von 20°dH gelegt. Die Gewichtszunahme pro Zeit ist der nachstehenden Tabelle 1 zu entnehmen.

### Beispiel 4: Herstellung eines nichterfindungsgemäßen Bodenverbesserungsmittels ohne Melasseanteil

Es wird der gleiche Ansatz wie in Beispiel 3 verwendet, wobei jedoch keinerlei Melasse eingesetzt wird, d. h. der Melasseanteil vollständig weggelassen wird. Nach dem Abkühlen wird der Polymerblock herausgenommen und eine abgeschnittene kleine Scheibe mit einem Gewicht von 1,2 g in Leitungswasser von 20°dH gelegt. Die Gewichtszunahme pro Zeit ist der nachstehenden Tabelle 1 zu entnehmen.

**Tabelle 1: Gewichtszunahme von chipartigen Scheiben mit 1,2 g Gewicht in Leitungswasser (20°dH) (alle Probenkörper jeweils auf das gleiche Gewicht zugeschnitten)**

| Zeit/h | 3,25 | 4,92 | 7,5 | 9,5 | 12,5 | 22,5 | 25,25 | 34,5 | 67,5 |
|---|---|---|---|---|---|---|---|---|---|
| Beispiel 1 H₂O-Aufnahme in g (erfindungsgemäß) | 24 | 34 | 48 | 58 | 68 | 86 | 88 | 104 | 160 |
| Beispiel 2 H₂O-Aufnahme in g (erfindungsgemäß) | 22 | 32 | 44 | 52 | 62 | 72 | 80 | 94 | 144 |
| Beispiel 3 H₂O-Aufnahme in g (erfindungsgemäß) | 14 | 20 | 26 | 32 | 42 | 66 | 72 | 86 | 138 |
| Beispiel 4 H₂O-Aufnahme in g (Vergleich) | 8 | 14 | 18 | 21 | 24 | 28 | 35 | 41 | 42 |

Aus Tabelle 1 geht hervor, daß das Quellungsvermögen der erfindungsgemäßen Bodenverbesserungsmittel melasseabhängig ist und innerhalb des Beobachtungszeitraums keineswegs erschöpft ist. Weiterhin ist bei dem nichterfindungsgemäßen Beispiel das Quellungsvermögen deutlich verringert und innerhalb des Beobachtungszeitraums bereits (nahezu) erschöpft.

In allen vier Ausführungsbeispielen werden als anorganische Feststoffpartikel solche mit Korngrößen unterhalb von 200 µm eingesetzt.

### Beispiele 5 A-C, 6 A-C und 7 A-C: Herstellung weiterer erfindungsgemäßer Bodenverbesserungsmittel

Die Beispiele 1 bis 3 werden wiederholt, wobei jedoch anstelle von Melasse Cellulose (Beispiele 5A, 5B und 5C) bzw. Stärke (Beispiele 6A, 6B und 6C) bzw. eine Stärke/Cellulose-Mischung 1 : 1 (Beispiele 7A, 7B und 7C) eingesetzt wird.

### Beispiel 8: Herstellung eines erfindungsgemäßen Bodenverbesserungsmittels mit Melasseanteil

Es wird der gleiche Ansatz wie in Beispiel 1 verwendet, wobei jedoch die Ausgangskomponenten zusammen gegeben und dieses Gemisch über einen Aufbereitungsextruder gefahren wird. Die Polymerisation im Extruder wird unter Zugabe von Kaliumdisulfitlösung und Natriumperoxidisulfatlösung gestartet.

### Beispiel 9: Vegetationsversuche mit Kresse

In der zuvor beschriebenen Verfahrensweise werden drei verschiedene erfindungsgemäße Bodenverbesserungsmittel mit unterschiedlichem Gehalt an kohlenhydratbasierten Struktureinheiten (konkret: Cellulose) in Mengen von 5 Gew.-% bzw. 7,5 Gew.-% bzw. 10 Gew.-% kohlenhydratbasierter Struktureinheit, bezogen auf das erfindungsgemäße Bodenverbesserungsmittel (Trokkengewicht), hergestellt. Als Vergleich dient ein nichterfindungsgemäßes Bodenverbesserungsmittel ohne kohlenhydratbasierte Struktureinheiten gemäß WO 2006/119828 A1 (Ausführungsbeispiel 1).

Die jeweiligen Bodenverbesserungsmittel werden in Mengen von jeweils ca. 15 Gew.-% mit Mutterboden vermischt und über 24 Stunden maximal mit Wasser gesättigt. Anschließend wird als Saatgut Kresse eingebracht. Bei allen drei erfindungsgemäßen Bodenverbesserungsmitteln und auch im Fall des nichterfindungsgemäßen Bodenverbesserungsmittels zeigt sich nach 12 Stunden eine erste Keimung und ist nach drei Tagen die Ausbildung eines kräftig grünen, geschlossenen Belags aus Kresse abgeschlossen. Nach weiteren 3 Tagen bleibt bei allen drei erfindungsgemäßen Bodenverbesserungsmitteln der grüne Belag nach weiterem Wachstum der Kresse vollumfänglich erhalten, während im Fall des nichterfindungsgemäßen Bodenverbesserungsmittels die Kresse welk geworden ist und die Wurzeln angefault bzw. braun gefärbt sind. Während im Fall der drei erfindungsgemäßen Bodenverbesserungsmittel ein feuchter, strukturierter Boden mit weißen und vitalen Wurzeln vorliegt, liegt im Fall des nicht erfindungsgemäßen Bodenverbesserungsmitteln eine gelige bis glibberige Konsistenz vor, was die Fäulnis der Wurzeln infolge der mangelnde Belüftung erklärt.

Das vorangehende Beispiel wird wiederholt, jedoch mit der Abweichung, daß die verschiedenen Bodenverbesserungsmittel als reine Pflanzsubstrate in Masse (d. h. zu 100 %) zusammen mit einer Fasermatte als Träger eingesetzt werden. Hier ist der Unterschied noch gravierender: Bei dem nichterfindungsgemäßen Bodenverbesserungsmittel tritt bereits nach drei Tagen eine starke Vergelung ein, so daß bereits am vierten Tag Wurzelfäulnis eintritt, während im Fall der vorliegenden Erfindung auch nach sechs Tagen die Wurzelbildung unbeeinträchtigt bleibt und eine durchgehend grüne Fläche vorhanden ist. Das vorangehende Ausführungsbeispiel belegt die Überlegenheit der erfindungsgemäßen Bodenverbesserungsmittel mit kohlenhydratbasierten Struktureinheiten unter teilweiser Veresterung der Carboxylgruppen gegenüber Bodenverbesserungsmitteln des Standes der Technik nur mit freien Carboxylgruppen in dem organischen Polymer ohne Veresterung mit kohlenhydrathaltigen Struktureinheiten.

### Beispiel 10: Weitere Vegetationsversuche mit Mais

Drei weitere erfindungsgemäße Bodenverbesserungsmittel auf Polyacrylatbasis mit unterschiedlichem Gehalt an kohlenhydratbasierten Struktureinheiten (Gewichtsanteil an kohlenhydratbasierten Struktureinheiten [hier: Stärke] in bezug auf organisches Polymer: 20 Gew.-% bzw. 30 Gew.-% bzw. 40 Gew.-%) sowie ein nichterfindungsgemäßes Ausführungsbeispiel ohne kohlenhydratbasierte Struktureinheiten (Ausführungsbeispiel 2 gemäß WO 2006/119828 A1) werden im Vergleich getestet. Zu diesem Zweck wird ein sehr ertragsarmes Maisfeld von 10.000 m² Gesamtfläche mit sandigem Boden in fünf gleiche Parzellen je 2.000 m² unterteilt. Während die erste Parzelle als Referenz dient und mit keinem Bodenverbesserungsmittel behandelt wird, werden die übrigen vier Parzellen jeweils mit den vorgenannten Bodenverbesserungsmitteln (d. h. drei erfindungsgemäße Bodenverbesserungsmittel sowie ein nichterfindungsgemäßes Bodenverbesserungsmittel) behandelt (jeweils ca. 200 g/m²). Der Ertrag (Ernte) der Referenzparzelle wird mit einem Referenzwert von 1 angenommen.

Nach Abschluß der Vegetationsperiode wird bei dem ersten bzw. zweiten bzw. dritten erfindungsgemäßen Bodenverbesserungsmittel eine Ertragssteigerung auf einen Wert von 6,1 bzw. 7,5 bzw. 10,0 (gegenüber Referenzwert von 1) erreicht, wohingegen diese bei dem nichterfindungsgemäßen Bodenverbesserungsmittel bei lediglich 2,5 liegt (jeweils bezogen auf die Referenzparzelle). Zudem wird bei den drei erfindungsgemäßen Bodenverbesserungsmitteln die Vegetationsperiode um etwa 20 % bzw. 35 % bzw. 40 % verkürzt, bei dem nichterfindungsgemäßen Bodenverbesserungsmittel dagegen nur um ca. 5 %. Dies belegt, daß die mit kohlenhydratbasierten Struktureinheiten modifizierten Polymere in den betreffenden Bodenverbesserungsmitteln eine signifikante Verbesserung der Ertragssteigerung und Verkürzung der Vegetationsperiode gegenüber solchen Bodenverbesserungsmitteln bewirken, welche als organische Polymere nichtmodifizierte organische Polymere mit freien Carboxylgruppen aufweisen. Im Fall der erfindungsgemäßen Bodenverbesserungsmittel sind nach einem Jahr 60 % bzw. 63 % bzw. 67,5 % der erfindungsgemäßen Bodenverbesserungsmittel abgebaut, während im Fall des nichterfindungsgemäßen Bodenverbesserungsmittels nach einem Jahr noch 100 % nachweisbar sind, was die schlechtere Bioverfügbarkeit und Bioabbaubarkeit des nichterfindungsgemäßen Bodenverbesserungsmittels belegt. Die vorangehenden Versuche belegen ebenfalls, daß über den Gehalt an kohlenhydratbasierten Struktureinheiten, insbesondere über das Gewichtsverhältnis organisches Polymer/kohlenhydratbasierte Struktureinheiten, eine signifikante Steuerung erreicht werden kann.

### Beispiel 11: Wiederum weitere Vegetationsversuche mit Mais

Entsprechend Beispiel 10 werden vier wiederum weitere erfindungsgemäße Bodenverbesserungsmittel auf Polyacrylatbasis mit unterschiedlichem Gehalt an kohlenhydratbasierten Struktureinheiten (Gewichtsverhältnis organisches Polymer/kohlenhydratbasierte Struktureinheiten 1 2 bzw. 1 : 1 bzw. 2 : 1, bzw. 3 : 1) getestet. Zu diesem Zweck wird ein sehr ertragsarmes Maisfeld von etwa 5.000 m² Gesamtfläche mit sandigem Boden in fünf gleiche Parzellen je etwa 1.000 m² unterteilt. Während die erste Parzelle als Referenz dient und mit keinem Bodenverbesserungsmittel behandelt wird, werden die übrigen vier Parzellen jeweils mit den vorgenannten Bodenverbesserungsmitteln (d. h. vier erfindungsgemäße Bodenverbesserungsmittel) behandelt (jeweils ca. 235 g/m²). Der Ertrag (Ernte) der Referenzparzelle wird mit einem Referenzwert von 1 angenommen. Nach Abschluß der Vegetationsperiode wird bei dem ersten bzw. zweiten bzw. dritten bzw. vierten Bodenverbesserungsmittel eine Ertragssteigerung auf einen Wert von 4,3 bzw. 6,5 bzw. 7 bzw. 7,2 (gegenüber Referenzwert von 1) erreicht, jeweils bezogen auf die Referenzparzelle. Zudem wird bei den vier erfindungsgemäßen Bodenverbesserungsmitteln die Vegetationsperiode um etwa 25 % bzw. 30 % bzw. 38 % bzw. 40 % verkürzt. Über den Gehalt an kohlenhydratbasierten Struktureinheiten, insbesondere über das Gewichtsverhältnis organisches Polymer/kohlenhydratbasierte Struktureinheiten, läßt sich eine signifikante Steuerung in bezug auf die Bodenverbesserung erreichen. Beste Ergebnisse werden bei einem Gewichtsverhältnis organisches Polymer/kohlenhydratbasierte Struktureinheiten ≥ 1 : 1 erhalten.

## Patentansprüche

1. Bodenverbesserungsmittel, insbesondere zur Erhöhung des Wasseraufnahme- und/oder Wasserspeichervermögens von Böden, wobei das Bodenverbesserungsmittel ein wasserquellbares Matrixmaterial auf Basis mindestens eines organischen Polymers aufweist, wobei dem Matrixmaterial anorganische Feststoffpartikel zugesetzt sind,
- wobei das organische Polymer des wasserquellbaren Matrixmaterials kohlenhydratbasierte Struktureinheiten, insbesondere kohlenhydratbasierte funktionelle Gruppen, umfaßt, wobei die kohlenhydratbasierten Struktureinheiten an das organische Polymer mittels Veresterung chemisch gebunden sind;
- wobei das organische Polymer des wasserquellbaren Matrixmaterials eine schwammartige und/oder poröse, Hohlräume aufweisende Struktur besitzt, wobei in das organische Polymer die anorganischen Feststoffpartikel eingelagert sind und/oder wobei an das organische Polymer die anorganischen Feststoffpartikel gebunden sind;
- wobei das organische Polymer des wasserquellbaren Matrixmaterials unter Einwirkung von Mikroorganismen biologisch abbaubar ausgebildet ist;
- wobei das organische Polymer des wasserquellbaren Matrixmaterials auf Basis mindestens eines superabsorbierenden Polymers (SAP) ausgebildet ist und sich von mindestens einer ungesättigten Carbonsäure aus der Gruppe von Acrylsäure, Methacrylsäure sowie deren Mischungen und Estern ableitet, wobei die kohlenhydratbasierten Struktureinheiten über die Carbonsäurefunktionen an das organische Polymer gebunden sind, wobei 3 % bis 80 % der Carbonsäurefunktionen des organischen Polymers mit kohlenhydratbasierten Struktureinheiten verestert sind; und
- wobei das Bodenverbesserungsmittel, bezogen auf das Bodenverbesserungsmittel, einen Restmonomergehalt von weniger als 1 Gew.-% aufweist.

2. Bodenverbesserungsmittel nach Anspruch 1, **dadurch gekennzeichnet, daß** das organische Polymer vernetzt, insbesondere strukturvernetzt, ausgebildet ist, insbesondere wobei die Vernetzung mittels difunktioneller Vernetzer, insbesondere mittels Diolen, bewirkt ist.

3. Bodenverbesserungsmittel nach einem der vorangehenden Ansprüche, **dadurch gekennzeichnet, daß** das organische Polymer ein Polyacrylat oder Polymethacrylat, bevorzugt ein vernetztes, insbesondere strukturvernetztes Polyacrylat oder Polymethacrylat, besonders bevorzugt ein insbesondere vernetztes, vorzugsweise strukturvemetztes Polyacrylat, ist.

4. Bodenverbesserungsmittel nach einem der vorangehenden Ansprüche, **dadurch gekennzeichnet, daß** das organische Polymer ein insbesondere vernetztes, vorzugsweise quervernetztes Polyacrylat oder Polymethacrylat ist, wobei mindestens 3 %, vorzugsweise mindestens 5 %, bevorzugt mindestens 10 %, und/oder insbesondere bis zu 80 %, vorzugsweise bis zu 50 %, besonders bevorzugt bis zu 25 %, der Carbonsäurefunktionen des organischen Polymers mit kohlenhydratbasierten Struktureinheiten verestert sind und/oder wobei 3 % bis 80 %, vorzugsweise 5 % bis 50 %, bevorzugt 10 % bis 25 %, der Carbonsäurefunktionen des organischen Polymers mit kohlenhydratbasierten Struktureinheiten verestert sind.

5. Bodenverbesserungsmittel nach einem der vorangehenden Ansprüche, **dadurch gekennzeichnet, daß** das organische Polymer ein insbesondere vernetztes, vorzugsweise quervernetztes Polyacrylat oder Polymethacrylat ist, wobei das organische Polymer kohlenhydratbasierte Struktureinheiten in einem Gewichtsverhältnis organisches Polymer/kohlenhydratbasierte Struktureinheiten ≥ 1 : 1, insbesondere ≥ 2 : 1, vorzugsweise ≥ 2,5 : 1, besonders bevorzugt ≥ 3 : 1, ganz besonders bevorzugt ≥ 4 : 1, enthält und/oder wobei das organische Polymer kohlenhydratbasierte Struktureinheiten in einem Gewichtsverhältnis organisches Polymer/kohlenhydratbasierte Struktureinheiten im Bereich von 1 : 1 bis 50 : 1, insbesondere 2 : 1 bis 20 : 1, vorzugsweise 3 : 1 bis 10 : 1, besonders bevorzugt 4 : 1 bis 6 : 1, enthält.

6. Bodenverbesserungsmittel nach einem der vorangehenden Ansprüche, **dadurch gekennzeichnet,**
**daß** die kohlenhydratbasierten Struktureinheiten gleich oder verschieden ausgebildet sind, insbesondere wobei im Fall voneinander verschiedener Struktureinheiten mindestens zwei, vorzugsweise mindestens drei voneinander verschiedene Struktureinheiten vorliegen, und/oder
**daß** die kohlenhydratbasierten Struktureinheiten auf Basis von saccharidischen Verbindungen, insbesondere aus der Gruppe von Mono-, Di-, Oligo- und Polysacchariden und deren Mischungen, ausgebildet sind.

7. Bodenverbesserungsmittel nach einem der vorangehenden Ansprüche, **dadurch gekennzeichnet,**
**daß** die kohlenhydratbasierten Struktureinheiten auf Basis von organischen Verbindungen mit einer halbacetalbildenden Carbonylgruppe und gleichzeitig mehreren Hydroxygruppen im Molekül, insbesondere Polyhydroxyaldehyden (Aldosen) und Polyhydroxyketonen (Ketosen) sowie davon abgeleiten Verbindungen sowie deren Oligo- und Polykondensaten, ausgebildet sind und/oder daß die kohlenhydratbasierten Struktureinheiten auf Basis von Verbindungen,
welche aus der Gruppe von Glucose; Saccharose; Cellulose und Cellulosederivaten, insbesondere Celluloseethern und -estern; Stärke und Stärkederivaten, insbesondere Stärkeether; Melasse sowie deren Mischungen ausgewählt sind, ausgebildet sind, und/oder
**daß** die kohlenhydratbasierten Struktureinheiten auf Basis von Glykanen, vorzugsweise Homoglykanen, ausgebildet sind.

8. Bodenverbesserungsmittel nach einem der vorangehenden Ansprüche, **dadurch gekennzeichnet, daß** gleiche oder voneinander verschiedene anorganische Feststoffpartikel in dem Bodenverbesserungsmittel vorliegen, insbesondere wobei im Fall voneinander verschiedener anorganischer Feststoffpartikel mindestens zwei, vorzugsweise mindestens drei voneinander verschiedene anorganische Feststoffpartikel vorhanden sind.

9. Bodenverbesserungsmittel nach einem der vorangehenden Ansprüche, **dadurch gekennzeichnet, daß** der anorganische Feststoff ausgewählt ist aus mineralischen Gesteinen, insbesondere Gesteinsmehle und/oder feinvermahlener Form, und/oder daß der anorganische Feststoff ausgewählt ist aus der Gruppe von Basalt, Bentonit, Bims, Calcit, Carbonatgesteinen, Diabas, Dolomit, Eruptivgesteinen, Feldspat, gemahlenem Glas, Gläsern, Glimmer, Gneiss, Grauwacke, Kieselerden, Kieselgur, Kieselsäure, Kreide, Lavagesteinen, Magnesit, Metalloxidgesteinen, Meteoritengesteinen, Montmorillonit, Pyrit, Quarz, Quarzsand, Schiefer, Sedimentgesteinen, Silikatgesteinen, Sulfatgesteinen, Tonen, Tongesteinen, Traß, Tuffen, Vulkanaschen, Vulkangesteinen und deren Mischungen.

10. Bodenverbesserungsmittel nach einem der vorangehenden Ansprüche, **dadurch gekennzeichnet, daß** die anorganischen Feststoffpartikel in das durch das organische Polymer gebildete Matrixmaterial eingelagert sind und/oder daß die anorganischen Feststoffpartikel an das durch das organische Polymer gebildete Matrixmaterial gebunden sind.

11. Bodenverbesserungsmittel nach einem der vorangehenden Ansprüche, **dadurch gekennzeichnet,**
**daß** die anorganischen Füllstoffpartikel in Mengen von 10 bis 90 Gew.-%, insbesondere 30 bis 80 Gew.-%, vorzugsweise 50 bis 75 Gew.-%, bezogen auf das Bodenverbesserungsmittel, vorhanden sind und/oder
**daß** die anorganischen Füllstoffpartikel Partikelgrößen (absolut) ≤ 2.000 µm, insbesondere ≤ 1.000 µm, vorzugsweise ≤ 500 µm, besonders bevorzugt ≤ 250 µm, aufweisen, insbesondere wobei mindestens 90 %, vorzugsweise mindestens 95 %, bevorzugt mindestens 99 %, der anorganischen Füllstoffpartikel innerhalb des vorgenannten Wertebereiches liegen, und/oder daß die anorganischen Füllstoffpartikel Partikelgrößen (absolut) im Bereich von 1 nm bis 2.000 µm, insbesondere 10 nm bis 1.000 µm, vorzugsweise 20 nm bis 500 µm, besonders bevorzugt 50 nm bis 250 µm, aufweisen, insbesondere wobei mindestens 90 %, vorzugsweise mindestens 95 %, bevorzugt mindestens 99 %, der anorganischen Füllstoffpartikel innerhalb des vorgenannten Wertebereiches liegen.

12. Bodenverbesserungsmittel nach einem der vorangehenden Ansprüche, **dadurch gekennzeichnet, daß** das Bodenverbesserungsmittel rieselfähig, insbesondere fließfähig, ausgebildet ist und/oder daß das Bodenverbesserungsmittel eine Schüttdichte im Bereich von 200 bis 900 g/l, insbesondere 500 bis 800 g/l, vorzugsweise 550 bis 750 g/l, besonders bevorzugt 600 bis 700 g/l, aufweist und/oder daß das Bodenverbesserungsmittel einen pH-Wert bei Wasserzusatz im Bereich von 4 bis 8, insbesondere 5 bis 7, aufweist und/oder daß das Bodenverbesserungsmittel eine Leitfähigkeit von weniger als 2.000 µS/cm, insbesondere weniger als 1.500 µS/cm, vorzugsweise weniger als 1.000 µS/cm, aufweist und/oder daß das Bodenverbesserungsmittel zu Formkörpern, insbesondere Pellets, Körnern, Kugeln, Granulaten, Scheiben, Plättchen oder dergleichen, verarbeitet ist.

13. Bodenverbesserungsmittel nach einem der vorangehenden Ansprüche, **dadurch gekennzeichnet,**
**daß** das Bodenverbesserungsmittel teilchenförmig ausgebildet ist und insbesondere eine Korngröße (absolut) im Bereich von 0,01 bis 20 mm, insbesondere 0,1 bis 10 mm, vorzugsweise 1 bis 8 mm, aufweist, insbesondere wobei mindestens 90 %, vorzugsweise mindestens 95 %, bevorzugt mindestens 99 %, der Teilchen des Bodenverbesserungsmittels innerhalb des vorgenannten Wertebereiches liegen, und/oder
**daß** das Bodenverbesserungsmittel ein zeitabhängiges Quellverhalten besitzt, insbesondere wobei das Bodenverbesserungsmittel eine Wasseraufnahme innerhalb einer Stunde von mindestens dem 10fachen, insbesondere mindestens dem 15fachen, vorzugsweise mindestens dem 20fachen, besonders bevorzugt mindestens dem 25fachen, seines Eigengewichts besitzt und/oder daß das Bodenverbesserungsmittel ein reversibles Wasseraufnahme- und/oder Wasserspeichervermögen besitzt.

14. Verwendung des Bodenverbesserungsmittel gemäß den vorangehenden Ansprüchen zur Verbesserung der Bodenqualität, insbesondere zur Erhöhung des Wasseraufnahme- und/oder Wasserspeichervermögens von Böden und/oder zur Auflockerung von Böden, insbesondere in der Landwirtschaft, im Wein-, Garten- und Landschaftsbau, für Sport-, Golf-, Garten-, Rasen- und Reitplätze oder zur Dachbegrünung oder zur Geländebefestigung, insbesondere bei Hanglagen, zur Desertifikationsbekämpfung in ariden Gebieten oder zur Pflanzenwachstumsförderung und -regulierung.

15. Verwendung des Bodenverbesserungsmittels gemäß den vorangehenden Ansprüchen als reversibler Wasser- und gegebenenfalls Wirkstoffspeicher, insbesondere in Kombination mit Herbiziden, Pestiziden, Fungiziden, Düngemitteln, Pflanzenwachstumsbeschleunigem und -regulatoren und Mikroorganismen, oder als Keimungsbeschleuniger in Kombination mit Saatgut oder durch gekennzeichnet, daß das Bodenverbesserungsmittel in den Boden eingearbeitet, insbesondere hiermit vermischt wird.

## Claims

1. Soil improver particularly for increasing the water absorption and/or water retention capacity of soil, wherein the soil improver comprises a water swellable matrix material on the base of at least one organic polymer, wherein inorganic solid particles are added to the matrix material,
- wherein the organic polymer of the water swellable matrix material comprises carbohydrate-based structural units, particularly carbohydrate-based functional groups, wherein the carbohydrate-based structural units are chemically bonded to the organic polymer by means of esterification;
- wherein the organic polymer of the water swellable matrix material has a spongy and/or porous structure comprising hollow spaces, wherein the inorganic solid particles are embedded within the organic polymer and/or wherein the inorganic solid particles are bonded to the organic polymer;
- wherein the organic polymer of the water swellable matrix material is formed bio-degradable by means of microorganism;
- wherein the organic polymer of the water swellable matrix material is formed on the base of at least one superabsorbent polymer (SAP) and is derived from at least one unsaturated carbonic acid selected from the group consisting of acrylic acid, methacrylic acid as well as blends and esters thereof, wherein the carbohydrate-based structural units are bonded to the organic polymer via the carbonic acid functions, wherein 3% to 80% of the carbonic acid functions of the organic polymer are esterified with carbohydrate-based structure units; and
- wherein the soil improver has a residue monomer content of less than 1 weight-% with respect to the soil improver.

2. Soil improver according to claim 1, **characterized in that** the organic polymer is formed cross-linked, particularly structurally cross-linked, wherein the cross-linking is effected particularly by means of difunctional cross-linking agents, particularly by means ofdiolen.

3. Soil improver according to claim 1 or 2, **characterized in that** the organic polymer is a polyacrylate or polymethacrylate, preferably a cross-linked, particularly a structurally cross-linked polyacrylate or polymethacrylate, and most preferred a cross-linked, particularly structurally cross-linked polyacrylate.

4. Soil improver according to any one of the preceding claims, **characterized in that** the organic polymer is particularly a cross-linked, preferably transversally cross-linked polyacrylate or polymethacrylate, wherein at least 3%, preferably 5%, more preferred at least 10% and/or particularly up to 80%, preferably up to 50% and most preferred up to 25% of the carbonic acid functions of the organic polymer are esterified with carbohydrate-based structural units, and/or wherein 3% to 80%, preferably 5% to 50%, more preferred 10 to 25% of the carbonic acid functions of the organic polymer are esterified with carbohydrate-based structural units.

5. Soil improver according to any one of the preceding claims, **characterized in that** the organic polymer is particularly a cross-linked, preferably transversally cross-linked polyacrylate or polymethacrylate, wherein the organic polymer comprises carbohydrate-based structural units within a weight ratio (organic polymer/carbohydrate-based structural units) ≥ 1:1, particularly ≥ 2:1, preferably ≥ 2,5:1, particularly preferred ≥ 3:1 and most preferred ≥ 4:1, and/or wherein the organic polymer comprises carbohydrate-based structural units within a weight ratio (organic polymer/carbohydrate-based structural units) in the range of 1:1 to 50:1, particularly 2:1 to 20:1, preferably 3:1 to 10:1 and particularly preferred 4:1 to 6:1.

6. Soil improver according to any one of the preceding claims, **characterized in that**
the carbohydrate-based structural units are formed identically or differently, wherein particularly in the case of structural units which are different from each other there are provided at least two, preferably at least three structural units which are different from each other; and/or
**in that** the carbohydrate-based structural units are formed on the base of saccharidic compounds, particularly from the group of mono-, di-, oligo- and polysaccharides and blends thereof.

7. Soil improver according to any one of the preceding claims, **characterized in that**
the carbohydrate-based structural units are formed on the base of organic compounds comprising a semi-acetate forming carbonyl group and simultaneously several hydroxy groups within the molecule, particularly polyhydroxyaldehydes (aldoses) and polyhydroxyketones (ketoses) as well as compounds derived therefrom and oligo- and polycondensates thereof; and/or
**in that** the carbohydrate-based structural units are formed on the base of compounds selected from the group consisting of glucose, saccharose, cellulose and cellulose derivatives, particularly cellulose ethers and esters; starch and starch derivatives, particularly starch ethers; molasses and blends thereof; and/or
**in that** the carbohydrate-based structural units are formed on the base of glycanes, preferably homoglykanes.

8. Soil improver according to any one of the preceding claims, **characterized in that** inorganic solid particles which are identical or different from each other, are present in the soil improver, wherein particularly in the case of inorganic solid particles which are different from each other at least two, preferably at least three inorganic solid particles are present which are different from each other.

9. Soil improver according to any one of the preceding claims, **characterized in that** the inorganic solid is selected from mineral rocks, particularly rock flour in finely pulverized form, and/or **in that** the inorganic solid is selected from the group consisting of basalt, bentonite, pumice, calcite, carbonate rock, diabas, dolomite, eruptive rock, feldspar, ground glass, glasses, mica, gneiss, graywacke, silica, kieselguhr, silicic acid, cretaceous, lava rock, magnesite, metal oxide rock, meteorite rock, montmorillonite, pyrite, quartz, glass sand, cliff, sedimentary rock, silicate rock, sulfate rock, clay, clay rock, trass, tuffs, volcanic ash, volcanic rock and blends thereon.

10. Soil improver according to any one of the preceding claims, **characterized in that** the inorganic solid particles are embedded in the matrix material formed by the organic polymer and/or **in that** the inorganic solid particles are bonded to the matrix material formed by the organic polymer.

11. Soil improver according to any one of the preceding claims, **characterized in that**
the inorganic solid particles are present in an amount of 10 to 90 weight-%, particularly 30 to 80 weight-%, preferably 50 to 75 weight-% with respect to the soil improver; and/or
**in that** the inorganic solid particles have particle sizes (absolute) ≤ 2000 µm, particularly 1000 µm, preferably ≤ 500 µm, particularly preferred ≤ 250 µm, wherein particularly at least 90%, preferably at least 95%, particularly preferred at least 99% of the inorganic solid particles are within the above mentioned numerical range; and/or
**in that** the inorganic solid particles have particle sizes (abolute) in the range of 1 nm to 2000 µm, particularly 10 nm to 1000 µm, preferably 20 nm to 500 µm, particularly preferred 50 nm to 250 µm, wherein particularly at least 90%, preferably at least 95%, particularly preferred at least 99% of the inorganic solid particles are within the abovementioned numerical range.

12. Soil improver according to any one of the preceding claims, **characterized in that**
the soil improver is formed free flowing, particularly flowable; and/or
**in that** the soil improver has a bulk density in the range of 200 to 900 g/l, particularly 500 to 800 g/l, preferably 550 to 750 g/l, particularly preferred 600 to 700 g/l; and/or
**in that** the soil improver with added water has a pH-value in the range of 4 to 8, particularly 5 to 7; and/or
**in that** the soil improver has a conductivity of less than 2000 µS/cm, particularly less than 1500 µS/cm, preferably less than 1000 µS/cm; and/or
**in that** the soil improver is processed into molded bodies, particularly pellets, grains, beads, granules, discs, platelets or the like.

13. Soil improver according to any one of the preceding claims, **characterized in that**
the soil improver is formed particle-like and particularly has a grain size (absolute) in the range of 0,01 to 20 mm, particularly 0,1 to 10 mm, preferably 1 to 8 mm, wherein particularly at least 90%, preferably at least 95%, more preferred at least 99% of the particles of the soil improver are within the abovementioned numerical range; and/or
**in that** the soil improver has a time-dependent swell behaviour, wherein the soil improver has a water absorption capacity within one hour of particularly at least 10-fold, preferably at least 15-wold, more preferred at least 20-fold, particularly preferred at least 25-fold of its own weight; and/or
**in that** the soil improver has a reversible water absorption and/or water retention capacity.

14. Use of a soil improver according to any one of the preceding claims for improving the soil quality, particularly for increasing the water absorption and/or water retention capacity of soils and/or for aerating soils, particularly in the fields of agriculture, viniculture, landscape gardening, for sports fields, golf courses, lawns and horse-riding areas or for green roofening or terrain stabilization, particularly at hillsides, for desertification control in arid areas or for plant growth promotion and regulation.

15. Use of the soil improver according to any one of the preceding claims as a reversible water and possibly active agent storage particularly in combination with herbicides, pesticides, fungicides, fertilizers, plant-growth promoters and regulators and microorganisms or as germination promoter in combination with seeds; or
**characterized in that** the soil improver is incorporated in, particularly mingled with, the soil.

## Revendications

1. Agent d'amélioration du sol, en particulier pour augmenter la capacité d'absorption et/ou d'accumulation de l'eau de sols, l'agent d'amélioration du sol présentant un matériau de matrice gonflable à l'eau à base d'au moins un polymère organique, le matériau de matrice étant additionné de particules solides inorganiques,
- le polymère organique du matériau de matrice gonflable à l'eau comprenant des unités structurelles à base d'hydrates de carbone, en particulier des groupes fonctionnels à base d'hydrates de carbone, les unités structurelles à base d'hydrates de carbone étant liées chimiquement par estérification au polymère organique ;
- le polymère organique du matériau de matrice gonflable à l'eau présentant une structure de type éponge et/ou poreuse, présentant des espaces creux, les particules solides inorganiques étant intégrées dans le polymère organique et/ou les particules solides inorganiques étant liées au polymère organique ;
- le polymère organique du matériau de matrice gonflable à l'eau étant réalisé de manière à être biodégradable sous l'effet de microorganismes ;
- le polymère organique du matériau de matrice gonflable à l'eau étant réalisé à base d'au moins un polymère superabsorbant (SAP) et dérivé d'au moins un acide carboxylique insaturé du groupe formé par l'acide acrylique, l'acide méthacrylique ainsi que leurs mélanges et esters, les unités structurelles à base d'hydrates de carbone étant liées via les fonctions acide carboxylique au polymère organique, 3% à 80% des fonctions acide carboxylique du polymère organique étant estérifiés par des unités structurelles à base d'hydrates de carbone ; et
- l'agent d'amélioration du sol présentant, par rapport à l'agent d'amélioration du sol, une teneur résiduelle en monomères de moins de 1% en poids.

2. Agent d'amélioration du sol selon la revendication 1, **caractérisé en ce que** le polymère organique est réalisé en réseau, en particulier en réseau structurel, l'interconnexion étant en particulier réalisée par un réticulant difonctionnel, en particulier par des diols.

3. Agent d'amélioration du sol selon l'une quelconque des revendications précédentes, **caractérisé en ce que** le polymère organique est un polyacrylate ou un polyméthacrylate, de préférence un polyacrylate ou polyméthacrylate en réseau, en particulier en réseau structurel, de manière particulièrement préférée un polyacrylate en particulier en réseau, de préférence en réseau structurel.

4. Agent d'amélioration du sol selon l'une quelconque des revendications précédentes, **caractérisé en ce que** le polymère organique est un polyacrylate ou un polyméthacrylate en particulier en réseau, de préférence réticulé, au moins 3%, de préférence au moins 5%, de préférence au moins 10%, et/ou en particulier jusqu'à 80%, de préférence jusqu'à 50%, de manière particulièrement préférée jusqu'à 25%, des fonctions acide carboxylique du polymère organique étant estérifiés par des unités structurelles à base d'hydrates de carbone et/ou 3% à 80%, de préférence 5% à 50%, de préférence 10% à 25%, des fonctions acide carboxylique du polymère organique étant estérifiés par des unités structurelles à base d'hydrates de carbone.

5. Agent d'amélioration du sol selon l'une quelconque des revendications précédentes, **caractérisé en ce que** le polymère organique est un polyacrylate ou un polyméthacrylate en particulier en réseau, de préférence réticulé, le polymère organique contenant des unités structurelles à base d'hydrates de carbone dans un rapport pondéral polymère organique/unités structurelles à base d'hydrates de carbone 1:1, en particulier ≥ 2:1, de préférence ≥ 2,5:1, de manière particulièrement préférée ≥ 3:1, de manière tout particulièrement préférée ≥ 4:1 et/ou le polymère organique contenant des unités structurelles à base d'hydrates de carbone dans un rapport pondéral polymère organique/unités structurelles à base d'hydrates de carbone dans la plage de 1:1 à 50:1, en particulier de 2:1 à 20:1, de préférence de 3:1 à 10:1, de manière particulièrement préférée de 4:1 à 6:1.

6. Agent d'amélioration du sol selon l'une quelconque des revendications précédentes, **caractérisé en ce que** les unités structurelles à base d'hydrates de carbone sont réalisées de manière identique ou différente, en particulier, dans le cas d'unités structurelles différentes les unes des autres, au moins deux, de préférence au moins trois, unités structurelles différentes les unes des autres étant présentes, et/ou **en ce que** les unités structurelles à base d'hydrates de carbone sont réalisées à base de composés saccharidiques, en particulier du groupe des
des disaccharides, des monosaccharides, et des polysaccharides, et leurs oligosaccharides et des polysaccharides et leurs mélanges.

7. Agent d'amélioration du sol selon l'une quelconque des revendications précédentes, **caractérisé en ce que** les unités structurelles à base d'hydrates de carbone sont réalisées à base de composés organiques présentant un groupe carbonyle semi-acétal et simultanément plusieurs groupes hydroxy dans la molécule, en particulier des polyhydroxyaldéhydes (aldoses) et des polyhydroxycétones (cétoses) ainsi que des composés dérivés de ceux-ci, ainsi que leurs produits d'oligocondensation et de polycondensation et/ou **en ce que** les unités structurelles à base d'hydrates de carbone sont réalisées à base de composés qui sont choisis dans le groupe formé par le glucose ; le saccharose ; la cellulose et les dérivés de cellulose, en particulier les éthers et les esters de cellulose ; l'amidon et les dérivés d'amidon, en particulier les éthers d'amidon ; la mélasse ainsi que leurs mélanges, et/ou **en ce que** les unités structurelles à base d'hydrates de carbone sont réalisées à base de glycanes, de préférence d'homoglycanes.

8. Agent d'amélioration du sol selon l'une quelconque des revendications précédentes, **caractérisé en ce que** des particules solides inorganiques identiques ou différentes les unes des autres se trouvent dans l'agent d'amélioration du sol, en particulier, dans le cas de particules solides inorganiques différentes les unes des autres, au moins deux, de préférence au moins trois types de particules solides inorganiques différentes étant présents.

9. Agent d'amélioration du sol selon l'une quelconque des revendications précédentes, **caractérisé en ce que** le solide inorganique est choisi parmi les roches minérales, en particulier la poudre de roche et/ou sous forme finement broyée, et/ou **en ce que** le solide inorganique est choisi dans le groupe formé par le basalte, la bentonite, la pierre ponce, la calcite, les roches carbonatées, la diabase, la dolomite, les roches éruptives, le feldspath, le verre broyé, les verres, le mica, le gneiss, le grauwacke, les terres siliceuses, le kieselgur, la silice, la craie, les pierres de lave, la magnésite, les pierres d'oxyde métallique, les pierres de météorite, la montmorillonite, la pyrite, le quartz, le sable de quartz, le schiste, les roches sédimentaires, les roches silicatées, les roches sulfatées, les argiles, les roches argileuses, la terre de trass, le tuf, les cendres volcaniques, les roches volcaniques et leurs mélanges.

10. Agent d'amélioration du sol selon l'une quelconque des revendications précédentes, **caractérisé en ce que** les particules solides inorganiques sont intégrées dans le matériau de matrice formé par le polymère organique et/ou **en ce que** les particules solides inorganiques sont liées au matériau de matrice formé par le polymère organique.

11. Agent d'amélioration du sol selon l'une quelconque des revendications précédentes, **caractérisé en ce que** les particules de charge inorganiques sont présentes en des quantités de 10 à 90% en poids, en particulier de 30 à 80% en poids, de préférence de 50 à 75% en poids, par rapport à l'agent d'amélioration du sol et/ou **en ce que** les particules de charge inorganiques présentant des grosseurs de particule (absolues) ≤ 2000 µm, en particulier ≤ 1000 µm, de préférence ≤ 500 µm, de manière particulièrement préférée ≤ 250 µm, en particulier au moins 90%, de préférence au moins 95%, de préférence au moins 99%, des particules de charge inorganiques se trouvant dans la plage de valeurs susmentionnées et/ou **en ce que** les particules de charge inorganiques présentent des grosseurs de particule (absolues) dans la plage de 1 nm à 2000 µm, en particulier de 10 nm à 1000 µm, de préférence de 20 nm à 500 µm, de manière particulièrement préférée de 50 nm à 250 µm, en particulier au moins 90%, de préférence au moins 95%, de préférence au moins 99%, des particules de charges inorganiques se trouvant dans la plage de valeurs susmentionnée.

12. Agent d'amélioration du sol selon l'une quelconque des revendications précédentes, **caractérisé en ce que** l'agent d'amélioration du sol est réalisé de manière à pouvoir ruisseler, en particulier de manière à pouvoir s'écouler et/ou **en ce que** l'agent d'amélioration du sol présente une densité apparente dans la plage de 200 à 900 g/l, en particulier de 500 à 800 g/l, de préférence de 550 à 750 g/l, de manière particulièrement préférée de 600 à 700 g/l, et/ou **en ce que** l'agent d'amélioration du sol présente un pH, lors de l'addition de l'eau, dans la plage de 4 à 8, en particulier de 5 à 7 et/ou **en ce que** l'agent d'amélioration du sol présente une conductivité inférieure à 2000 µScm, en particulier inférieure à 1500 µS/cm, de préférence inférieure à 1000 µS/cm et/ou en ce que l'agent d'amélioration du sol est transformé en corps façonnés, en particulier en pellets, grains, billes, granulats, plaques, écailles ou analogues.

13. Agent d'amélioration du sol selon l'une quelconque des revendications précédentes, **caractérisé en ce que** l'agent d'amélioration du sol est réalisé sous forme de particules et présente en particulier une grosseur de grain (absolue) dans la plage de 0,01 à 20 mm, en particulier de 0,1 à 10 mm, de préférence de 1 à 8 mm, en particulier au moins 90%, de préférence au moins 95%, de préférence au moins 99%, des particules de l'agent d'amélioration du sol se trouvant dans la plage de valeurs susmentionnée, et/ou **en ce que** l'agent d'amélioration du sol présente un comportement de gonflement dépendant du temps, en particulier l'agent d'amélioration du sol présentant une absorption d'eau, en une heure, représentant au moins 10 fois, en particulier au moins 15 fois, de préférence au moins 20 fois, de manière particulièrement préférée au moins 25 fois, son propre poids et/ou **en ce que** l'agent d'amélioration du sol présente une capacité d'absorption et/ou d'accumulation de l'eau réversible.

14. Utilisation de l'agent d'amélioration du sol selon les revendications précédentes pour améliorer la qualité du sol, en particulier pour augmenter la capacité d'absorption et/ou d'accumulation de l'eau de sols et/ou pour ameublir les sols, en particulier dans l'agriculture, la viticulture, l'horticulture et l'aménagement d'espaces verts, pour les terrains de sport, de golf, les jardins, les terrains gazonnés et les manèges ou pour la végétalisation des toitures ou pour la stabilisation des terrains, en particulier dans le cas de coteaux, pour la lutte contre la désertification dans les zones arides ou pour la favorisation et la régulation de la croissance des plantes.

15. Utilisation de l'agent d'amélioration du sol selon les revendications précédentes, comme accumulateur réversible d'eau et le cas échéant de substances actives, en particulier en combinaison avec des herbicides, des pesticides, des fongicides, des engrais, des accélérateurs et des régulateurs de la croissance des plantes et des microorganismes ou comme accélérateurs de germination en combinaison avec des semences, **caractérisé en ce que** l'agent d'amélioration du sol est incorporé dans le sol, en particulier mélangé avec celui-ci.
